# EUROPÄISCHE PATENTANMELDUNG

(11) **EP 3 329 774 A1**
(43) Veröffentlichungstag der Anmeldung: **06.06.2018**
(21) Anmeldenummer: 16201926.9
(22) Anmeldetag: 02.12.2016
(51) Int. Cl.: A01N 25/10, A01N 25/34, A01N 27/00, A01N 65/00

(54) **KUNSTSTOFFMATERIAL MIT ANTIBAKTERIELLEN ODER ANTIMIKROBIELLEN UND BAKTERIZIDEN ZUSCHLAGSTOFF**

(71) Anmelder: Ayvazian, Araik, 06846 Dessau (DE)
(72) Erfinder: Ayvazian, Araik, 06846 Dessau (DE)
(74) Vertreter: Weilnau, Carsten

(57) **Zusammenfassung**

Die vorliegende Erfindung betrifft ein Verfahren zur Herstellung eines Kunststoffmaterials und ein entsprechendes Kunststoffmaterial, welches ein Kunststoff-Basismaterial (10) und zumindest einen antibakteriellen und/oder antimikrobiellen Zuschlagstoff (12) enthält, welcher zumindest ein Terpen aufweist.

## Beschreibung

Die vorliegende Erfindung betrifft ein Kunststoffmaterial mit antibakteriellen oder antimikrobiellen Eigenschaften. Sie betrifft insbesondere ein mit ätherischen Ölen versetztes Kunststoffmaterial sowie ein Verfahren zur Herstellung eines solchen Kunststoffmaterials.

### Hintergrund

Für die Einhaltung hygienischer Standards, insbesondere zur Vermeidung der unkontrollierten Ausbreitung von Infektionskrankheiten sowie Bakterien ist es erstrebenswert Produkte des täglichen Bedarfs bereitzustellen, die eine antibakterielle oder keimtötende Wirkung aufweisen. So ist beispielsweise aus der DE 20 2016 102 964 U1 ein antibakterielles, korrosionsverhütendes Verbundmaterial bekannt, welches einen Substratkörper und eine antibakterielle, korrosionsverhütende Schicht aufweist, die auf einer Oberfläche des Substratkörpers aufgebracht ist. Im täglichen Gebrauch kann die an der Oberfläche des Substratkörpers vorgesehene Schicht jedoch mitunter gewissen Abnutzungserscheinungen unterliegen. Eine antibakterielle oder keimtötende Wirkung wäre sodann nur noch eingeschränkt oder gar nicht mehr gegeben.

Der vorliegenden Erfindung liegt demgegenüber die Aufgabe zugrunde, ein Kunststoffmaterial mit antibakterieller oder antimikrobieller Wirkung bereitzustellen. Das Material soll sich durch eine dauerhafte antibakterielle oder antimikrobielle Wirkung auszeichnen, die selbst nach langer Benutzung oder infolge von Oberflächenverschleiß erhalten bleibt.

### Erfindung und vorteilhafte Ausgestaltungen

Diese Aufgabe wird mit einem Kunststoffmaterial nach dem Patentanspruch 1 sowie mit einem Verfahren nach Patentanspruch 13 gelöst, wobei vorteilhafte Ausgestaltungen Gegenstand jeweils abhängiger Ansprüche sind.

Insoweit ist ein antibakterielles, antimikrobielles und/oder bakterizides Kunststoffmaterial mit einem Kunststoff-Basismaterial und mit zumindest einem antibakteriellen, antimikrobiellen und/oder bakteriziden Zuschlagstoff vorgesehen. Der Zuschlagstoff weist zumindest ein Terpen auf. Das zumindest eine Terpen verleiht dem Kunststoffmaterial eine antibakterielle bzw. antimikrobielle Eigenschaft. Von Vorteil ist das zumindest eine Terpen homogen mit dem Kunststoff-Basismaterial vermischt oder in das Kunststoff-Basismaterial eingebettet bzw. eingebunden.

Dadurch dass das zumindest eine Terpen homogen und gleichmäßig mit dem Kunststoff-Basismaterial vermischt und somit quasi im gesamten Volumen des erfindungsgemäßen Kunststoffmaterials vorhanden ist, kann das Kunststoffmaterial eine dauerhafte und langlebige antibakterielle oder antimikrobielle Wirkung bereitstellen. Sollten einzelne Oberflächenabschnitte oder -bereiche des Kunststoffmaterials einem Verschleiß, so etwa Abrieb unterliegen, so führt dies nicht zu einer Verschlechterung der antibakteriellen oder antimikrobiellen Eigenschaften. Diese bleiben auch bei starker mechanischer Beanspruchung des Kunststoffmaterials wirksam erhalten.

Das zumindest eine Terpen kann universell für und mit unterschiedlichsten Kunststoff-Basismaterialien zur Bereitstellung eines antibakteriellen und/oder antimikrobiellen Kunststoffmaterials verwendet werden. Vorzugsweise wird das zumindest eine Terpen einem aufgeschmolzenen Kunststoff-Basismaterial beigemischt, wodurch das Terpen nicht flüchtig in das Kunststoffmaterial eingebunden werden kann. Die Beimischung des zumindest einen Terpens stellt nur einen zusätzlichen Herstellungs- oder Verfahrensschritt im Zuge der Herstellung eines Kunststoffmaterials dar. Die antibakteriellen und/oder antimikrobiellen Eigenschaften des Kunststoffmaterials können auf diese Art und Weise mit vergleichsweise geringem Kosten- oder Herstellungsaufwand verbessert werden.

Nach einer weiteren Ausgestaltung enthält der Zuschlagstoff zumindest ein oder mehrere Monoterpene oder ein oder mehrere Sesquiterpene oder eine hieraus gebildete Mischung. Der Zuschlagstoff kann insbesondere beides, nämlich Monoterpene und Sesquiterpene beinhalten. Der Zuschlagstoff kann insbesondere mehrere verschiedene Monoterpene als auch mehrere verschiedene Sesquiterpene aufweisen. Es ist denkbar, dass der Zuschlagstoff aus einer natürlichen Rohstoffquelle, beispielsweise aus Kiefernholz oder aus Kiefernnadeln gewonnen ist. Bei dem Zuschlagstoff kann es sich auch um ein ätherisches Öl, beispielsweise um Kiefernnadelöl handeln. Es ist ferner denkbar, dass der Zuschlagstoff zumindest eines oder eine Kombination der nachfolgenden ätherischen Öle aufweist oder hieraus besteht: Kiefernnadelöl - Pini aetheroleum, Bitterfenchelöl - Foeniculi amari aetheroleum, Süßfenchelöl - Foeniculi dulcis aetheroleum, Korianderöl - Coriandri aetheroleum, Bitterorangenblütenöl - Aurantii amari floris aetheroleum, Lavendelöl - Lavandulae aetheroleum, Salbeiöl - Salviae aetheroleum.

Der Zuschlagstoff kann ein natürliches ätherisches Öl, aber auch ein synthetisches ätherisches Öl aufweisen. Die Monoterpene oder die Sesquiterpene können synthetisch hergestellt sein. Synthetische oder auch natürliche Monoterpene oder Sesquiterpene können ferner mit weiteren Zusätzen, so zum Beispiel mit Phenylpropanen gestreckt oder versetzt sein.

Nach einer weiteren Ausgestaltung weist der Zuschlagstoff zumindest einen der folgenden Stoffe oder eine Kombination der nachfolgenden Stoffe auf: α-Pinen, β-Pinen, Δ-Caren, Camphen, Limonen, Myrcen, β-Phellandren, p-Cymen, Terpinol, α-Terpin, γ-Terpin, α-Terpineol, Bornylacetat oder Terpinylacetat. Die Zusammensetzung des Zuschlagstoffs kann je nach Rohstoffquelle und je nach Verarbeitung eines Rohstoffs variieren.

Nach einer weiteren Ausgestaltung ist der Zuschlagstoff aus Kiefernnadelöl oder aus Kiefernkernholz gewonnen. Der Zuschlagstoff wird insbesondere aus der Familie der Pinaceae gewonnen, welche zur Unterklasse der Coniferae, der Nadelhölzer zählen. Der Zuschlagstoff kann insbesondere auch aus Kiefernnadelöl bestehen oder in Form von Kiefernkernholz dem Kunststoff-Basismaterial beigemischt sein. Die Zusammensetzung des Terpens bzw. des Terpentinöls wird typischerweise von Monoterpenkohlenwasserstoffen bestimmt. Der Zuschlagstoff bzw. das Kiefernnadelöl kann neben den Monoterpenkohlenwasserstoffen auch Terpenalkohole und entsprechende Ester aufweisen. Insbesondere kann der Zuschlagstoff Kiefernnadelöl, Pini Etheroleum aufweisen, welches durch Wasserdampfdestillation aus den frischen Nadeln, Zweigspitzen oder frischen Ästen von Pinus Silvestris L. oder anderen Arten der Gattung Pinus gewonnen wird.

Als Zuschlagstoff können sowohl ein ätherisches Öl, wie zum Beispiel Kiefernnadelöl, aber auch ein Zwischenprodukt der Gewinnung des betreffenden ätherischen Öls, so zum Beispiel Kiefernholz oder Kiefernnadeln verwendet werden. Der Zuschlagstoff bzw. dessen Terpene können dabei in Holzfasern gebunden sein und im fasergebundenen Zustand als Zuschlagstoff dem Kunststoff-Basismaterial für die Herstellung des antibakteriellen oder antimikrobiellen Kunststoffmaterials beigemischt sein. Die Beimischung des Zuschlagstoffs in einer in Holz oder in Holzfasern gebundenen Form erweist sich herstellungstechnisch als besonders günstig. Die die antibakterielle und/oder antimikrobielle Wirkung bereitstellenden Terpene müssen hierbei nicht gesondert durch Destillation gewonnen werden, sondern können direkt mit Holz oder mit Holzfasern als Trägersubstanz dem Kunststoffmaterial beigemischt werden. Es versteht sich von selbst, dass das Kiefernkernholz, Kiefernholz oder die Kiefernnadeln in zerkleinerter, beispielsweise granularer und/oder mehlartiger Konsistenz dem Kunststoff-Basismaterial beigemischt sind.

Nach einer weiteren Ausgestaltung beträgt ein Gewichtsanteil des Zuschlagstoffs im fertigen Kunststoffmaterial zumindest 0,05 Gew.-%. Von Vorteil kann der Gewichtsanteil des Zuschlagstoffs zumindest 1 %, zumindest 2 % oder zumindest 5 % betragen. Je nach Verwendungszweck des Kunststoffmaterials kann der Gewichtsanteil des Zuschlagstoffs bis zu 70 Gew.-% betragen. Der prozentuale Anteil des Zuschlagstoffs an antibakteriellem und/oder antimikrobiellem Kunststoffmaterial kann je nach Einsatzzweck und Weiterverarbeitung des Kunststoffmaterials gewählt sein. So kann das Kunststoffmaterial beispielsweise als Masterbatch-Material ausgestaltet sein, welches wiederum anderen Kunststoffen oder Kunststoffgemischen als Zusatz hinzuzufügen ist. Sofern das hier vorgesehene antibakterielle und/oder antimikrobielle Kunststoffmaterial als Masterbatch-Material fungiert, kann der Gewichtsanteil des Zuschlagstoffs mehr als 50 Gew.-%, mehr als 60 Gew.-% und bis zu 70 Gew.-% betragen.

Nach einer weiteren Ausgestaltung beträgt der Gewichtsanteil des Kunststoff-Basismaterials im antibakteriellen und/oder antimikrobiellen Kunststoffmaterial zumindest 25 Gew.-%, zumindest 30 Gew.-%, zumindest 40 Gew.-%, zumindest 50 Gew.-% und höchstens 99,5 Gew.-%.

Das Kunststoffmaterial kann ausschließlich aus einem oder aus mehreren Kunststoff-Basismaterialien und dem antibakteriellen und/oder antimikrobiellen Zuschlagstoff bestehen. Es ist folglich denkbar, dass das antibakterielle und/oder antimikrobielle Kunststoffmaterial zu 99,5 Gew.-% aus dem Kunststoff-Basismaterial und zu 0,5 Gew.-% aus dem Zuschlagstoff besteht. Es ist ferner denkbar, dass das antibakterielle und/oder antimikrobielle Kunststoffmaterial zumindest 1 Gew.-% oder 2 Gew.-% des antimikrobiellen Zuschlagstoffs sowie 70 Gew.- % oder mehr des Kunststoff-Basismaterials aufweist. Ferner kann das antibakterielle und/oder antimikrobielle Kunststoffmaterial noch mit weiteren Füllstoffen, beispielsweise mit Faserzusätzen versehen sein.

Das antibakterielle und/oder antimikrobielle Kunststoffmaterial weist jedoch zumindest 25 Gew.-%, 30 Gew.-%, 40 Gew.-% oder zumindest 50 Gew.-% eines Kunststoff-Basismaterials oder Kunststoff-Basismaterialgemischs auf.

Nach einer weiteren Ausgestaltung weist das Kunststoff-Basismaterial zumindest ein Plastomer, ein Elastomer oder ein Duromer oder ein hieraus gebildetes Gemisch auf.

Als Plastomere kommen insbesondere thermoplastische Materialien, das heißt nicht vernetzte Polymere infrage, welche wiederholt einschmelzbar sind. Das Kunststoff-Basismaterial kann insoweit Polyolefine, so z.B. Polyethylen und/oder Polypropylen aufweisen. Bei Verwendung eines Plastomers als Kunststoff-Basismaterial kann das antibakterielle und/oder antimikrobielle Kunststoffmaterial beispielsweise in Form einer Folie vorliegen. Diese kann beispielsweise eine Stärke bis 1 mm aufweisen. Das Folien-Kunststoffmaterial kann dabei zum Beispiel 1 bis 10 Gew.-% eines antibakteriellen und/oder antimikrobiellen Zuschlagstoffs sowie 90 bis 99 Gew.-% eines Plastomers, so zum Beispiel ein Polyethylen, beispielsweise ein hochdichtes Polyethylen (HDPE) aufweisen. Die Folie kann dabei nach einer Folienblastechnik hergestellt sein.

Bei Verwendung eines oder mehrerer Elastomere, sogenannter teilvernetzter Polymere, als Kunststoff-Basismaterial, kommen sämtliche Elastomermaterialien oder Gummiwerkstoffe, von Naturkautschuk bis hin zu hochmolekularen und synthetischen Elastomeren infrage. Zum Beispiel kann das Kunststoff-Basismaterial Ethylenvinylalkohol (EVA) aufweisen. Auch hierbei kann das auf EVA-Basis hergestellte antibakterielle und/oder antimikrobielle Kunststoffmaterial in Folienform vorliegen oder als Folie ausgebildet sein. Eine typische Zusammensetzung des antibakteriellen und/oder antimikrobiellen Kunststoffmaterials kann den Zuschlagstoff in einem Bereich von 0,05 Gew.-% bis 5 Gew.-% und das thermoplastische Elastomer als Kunststoff-Basismaterial mit einem Gewichtsanteil von 95 Gew.-% bis 99,95 Gew.-% aufweisen.

Es ist ferner denkbar, dass das Kunststoff-Basismaterial ein oder mehrere Duromere bzw. Duroplaste aufweist. Hierbei handelt es sich um weitreichend vernetzte Polymere, die in klassischem Sinne nicht aufschmelzbar sind. Erfindungsgemäße antibakterielle und/oder antimikrobielle Kunststoffmaterialien auf Basis eines Plastomers oder eines Elastomers sind bei Zimmertemperatur zumeist fest und liegen demgemäß als Festkörper vor. Bei Duromeren als Kunststoff-Basismaterial kann das antibakterielle und/oder antimikrobielle Kunststoffmaterial auch in flüssiger Form oder in einem zähflüssigen Zustand vorliegen. Das antibakterielle und/oder antimikrobielle Kunststoffmaterial kann dabei insbesondere für eine Oberflächenversiegelung von weiteren, etwa dritten Komponenten und Gegenständen fungieren. Es kann beispielsweise in Form eines Sprays und mittels Sprühens auf eine Oberfläche aufbringbar sein.

Nach einer weiteren Ausgestaltung weist das Kunststoffmaterial neben dem Kunststoff-Basismaterial und dem antibakteriellen und/oder antimikrobiellen Zuschlagstoff zumindest einen Füllstoff auf. Dieser kann Holz, Holzfasern, Kork oder andere Naturfasern enthalten. Als Holz oder Holzfasern kommen insbesondere Nadelhölzer, insbesondere Kiefern in Betracht. Durch Beimischung eines Füllstoffs auf Holz- oder Holzfaserbasis kann der Anteil des antibakteriellen und/oder antimikrobiellen Zuschlagstoffs reduziert werden. Es ist ferner denkbar, dass auch der antibakterielle und/oder antimikrobielle Zuschlagstoff annähernd vollständig oder sogar ausschließlich in Form von Holz oder Holzfasern vorliegt und in einer derartigen gebundenen Form mit dem Kunststoff-Basismaterial homogen vermischt ist.

Als Naturfasern können z.B. Zellulose oder Baumwolle vorgesehen sein. Auch kann das Holz in Faserform, als Holzspäne oder als Holzmehl vorgesehen werden.

Es ist ferner denkbar, dass das Kunststoffmaterial ein Kunststoff-Basismaterial, zumindest ein ätherisches Öl und einen Zuschlagsstoff, wie z.B. Holz, Holzfasern oder andere Naturfasern oder biologische Fasern aufweist.

Es ist hierbei insbesondere vorgesehen, dass das antibakterielle und/oder antimikrobielle Kunststoffmaterial als Basissubstrat oder als Ausgangsmaterial für sogenannte Korkböden Verwendung findet. So kann insbesondere vorgesehen sein, dass das antibakterielle und/oder antimikrobielle Kunststoffmaterial mit 70 Gew.-% Kork als Zuschlagstoff versetzt ist. Ein Korkboden mit antibakteriellen Eigenschaften kann beispielsweise ein Korkgranulat und EVA aufweisen, wobei die Mischung ferner mit 0,1 bis 5 Gew.-% des zuvor beschriebenen antibakteriellen und/oder antimikrobiellen Zuschlagstoffs versetzt ist.

Das als Bodenbelag ausgestaltete antibakterielle und/oder antimikrobielle Kunststoffmaterial kann zum Beispiel 0,1 bis 5 Gew.-% Öl, 25 bis 29,9 Gew.-% EVA und bis zu 70 Gew.-% Kork aufweisen. Das Kunststoffmaterial kann nach Durchmischung der einzelnen Komponenten zu handelsgebräuchlichen Platten verpresst sein. Derartige korkähnlich anmutende Platten weisen typischerweise eine poröse Oberfläche auf. Mikroben oder Bakterien, welche sich unweigerlich in den Hohlräumen ansammeln können durch die antibakteriellen oder antimikrobiellen Eigenschaften weitreichend unschädlich gemacht werden. Auch können z.B. bei einem Korkanteil von 50 Gew.-% - 70 Gew.-% Kork unterschiedliche Anteile an ätherischem Öl und EVA aufweisen. Bei einem Korkanteil von z.B. 70 Gew.-% können z.B. bis zu 10 Gew.-% ätherische Öle und bis zu 20 Gew.-% EVA vorgesehen sein.

Nach einer weiteren Ausgestaltung ist das antibakterielle und/oder antimikrobielle Kunststoffmaterial als Masterbatch-Material, als Granulat oder als Folie ausgebildet. Typischerweise ist das mit dem Zuschlagstoff versehene antibakterielle und/oder antimikrobielle Kunststoffmaterial bei Zimmertemperatur fest. Das Kunststoffmaterial kann bei Zimmertemperatur eine feste und spröde Konsistenz aufweisen. Je nach Kunststoff-Basismaterial und je nach konkreter Zusammensetzung sowie je nach Anteil und mechanischer Beschaffenheit des Zuschlagstoffs kann das antibakterielle und/oder antimikrobielle Kunststoffmaterial auch bei Zimmertemperatur fließfähig oder zähflüssig, zumindest aber elastisch oder plastisch deformierbar sein.

Nach einer weiteren Ausgestaltung ist der Zuschlagstoff dem Kunststoff-Basismaterial beigemischt, wobei sich das Kunststoff-Basismaterial in einem aufgeschmolzenen Zustand befindet. Er ist weitreichend homogen im Kunststoff-Basismaterial dispergiert. Typischerweise ist der Zuschlagstoff unlöslich im Kunststoff-Basismaterial eingebettet. Durch ein Beimischen des Zuschlagstoffs in einer Schmelze des Kunststoff-Basismaterials kann eine besonders homogene Durchmischung und eine homogene Verteilung des Zuschlagstoffs im Volumen des hierdurch hergestellten Kunststoffmaterials bereitgestellt werden. Zudem können etwaige, z.B. bei Zimmertemperatur leicht flüchtige Bestandteile des Zuschlagstoffs auf diese Art und Weise dauerhaft im Kunststoffmaterial gebunden werden.

Nach einer weiteren Ausgestaltung ist das Kunststoffmaterial im Wesentlichen faserfrei. Es ist insbesondere frei von Naturfasern wie zum Beispiel Cellulose- oder Holzfasern. Hierbei ist insbesondere vorgesehen, dass der Zuschlagstoff faserfrei ist.

Ein faserfreier Zuschlagstoff eignet sich besonders gut für eine homogene Durchmischung mit dem Kunststoff-Basismaterial.

Auch ist nach einer weiteren Ausführungsform vorgesehen, dass der Zuschlagstoff bei Zimmertemperatur pastös, fließfähig oder flüssig ist. Ein pastöser, fließfähiger oder flüssiger Zuschlagstoff eignet sich besonders gut für eine homogene Durchmischung mit dem Kunststoff-Basismaterial. Ferner kann der Zuschlagstoff hinsichtlich seiner antibakteriell oder antimikrobiell wirkenden Bestandteile und Essenzen hochkonzentriert sein. Die Zugabe des Zuschlagstoffs zum Kunststoff-Basismaterial in pastöser, fließfähiger oder flüssiger Form führt somit zu einer langanhaltenden antibakteriellen oder antimikrobiellen Wirkung des Kunststoffmaterials und der hieraus gebildeten Gegenstände und Objekte.

Nach einem weiteren Aspekt betrifft die Erfindung ferner ein Verfahren zur Herstellung eines Kunststoffmaterials. Es wird hierbei in einem ersten Schritt ein Kunststoff-Basismaterial in einem Mischer bereitgestellt. In einem weiteren Schritt wird das Kunststoff-Basismaterial im Mischer auf eine vorgegebene Mischtemperatur erwärmt. Die Mischtemperatur liegt hierbei typischerweise oberhalb der Schmelztemperatur des Kunststoff-Basismaterials. Zusammen mit oder nach dem Erwärmen auf die Mischtemperatur wird zumindest ein antibakterieller und/oder antimikrobieller Zuschlagstoff zur Bildung einer Materialmischung hinzugefügt. Der Zuschlagstoff enthält zumindest ein Terpen.

Typischerweise handelt es sich bei dem Zuschlagstoff um ein oder mehrere Monoterpene oder um ein oder mehrere Sesquiterpene. Bei dem Zuschlagstoff kann es sich um ein oder mehrere ätherische Öle, beispielsweise um Kiefernnadelöl handeln. Es ist dabei ferner denkbar, dass der Zuschlagstoff auch in gebundener Form, beispielsweise in Form eines Naturfaserstoffs, beispielsweise in Form von Kiefernkernholz oder in Form von Kiefernnadeln dem Kunststoff-Basismaterial zugefügt wird.

Nach Hinzufügen des antibakteriellen und/oder antimikrobiellen Zuschlagstoffs wird die im Mischer enthaltene Materialmischung bei vorgegebener Temperatur über die Dauer eines vorgegebenen Zeitintervalls durchmischt, um eine möglichst homogene Verteilung des Zuschlagstoffs im Kunststoff-Basismaterial zu erhalten.

Grundsätzlich ist das Verfahren mit unterschiedlichen Mischern durchführbar. Als Mischer können sowohl kontinuierliche Mischer, wie zum Beispiel Planetenwalzenextruder, Kneter, Mischer sowie Doppelschneckenextruder, aber auch diskontinuierliche Mischer, wie zum Beispiel Heiz- und/oder Kühlmischer verwendet werden. Bei einem Heiz- und/oder Kühlmischer kann das im Mischer aufgenommene Mischgut auf ein erforderliches Temperaturniveau erwärmt oder abgekühlt werden. Dabei entsteht meist keine vollständige Schmelze des Kunststoff-Mischguts, sondern nur eine Art "Anschmelzen", sodass die Oberfläche der zu mischenden und im Mischer bereits enthaltenen Komponenten mit einem weiteren Stoff, beispielsweise den antibakteriellen und/oder antimikrobiellen Zuschlagstoff benetzt wird.

Der mittels eines Heiz- und/oder Kühlmischers durchführbare Mischvorgang erfolgt meist unter Atmosphärendruck. Das antibakterielle und/oder antimikrobielle Kunststoffmaterial kann mit einem Heiz-/Kühlmischer beispielsweise auf Basis von Thermoplasten oder auf Basis von Elastomeren sowie auch auf der Basis von Duromeren hergestellt werden. Für die Herstellung des antibakteriellen und/oder antimikrobiellen Kunststoffmaterials kann beispielsweise ein thermoplastisches Granulat, so zum Beispiel Polypropylen mit einer Granulatgröße von etwa 6 mm mit feinem Holzmehl mit einer Korngröße im Bereich von 200 bis 500 µm in einem vorgegebenen Masseverhältnis, beispielsweise in einem Masseverhältnis von 1:1, 1:2, 1:3, 1:4 und umgekehrt; d.h. in einem Masseverhältnis 2:1; 3:1 oder 4:1 vermischt werden.

Bei einer Prozesstemperatur oder Mischtemperatur von etwa 130 °C schmilzt die Oberfläche der Polypropylen-Granulatkörner an und das mit dem Zuschlagstoff versehende Holzmehl bindet sich an der Oberfläche der aufgeschmolzenen Granulen. Nach einer vorgegebenen Mischzeit wird der Mischer entleert und das Mischgut abgekühlt. Bei Verwendung von Elastomeren können beispielsweise Naturkork und EVA nacheinander in einen Heizmischer gegeben werden. Bei einer Prozesstemperatur von zum Beispiel 70 °C entsteht durch Durchmischung und bei Erreichen einer entsprechenden Schmelztemperatur ein Klumpen, welcher nach Beendigung des Mischprozesses abgekühlt und dann wieder zu einem Granulat zerkleinert werden kann.

Als Mischer können auch ein- oder mehrwellige Streckenextruder, beispielsweise ein Ein- oder Zwei- bzw. Dreischnecken-Extruder verwendet werden. Es können hierbei doppelwellige Schneckenextruder vorgesehen sein, die entweder konisch oder zylindrisch ausgebildet sind. Die Zwei- oder Mehrschnecken-Extruder können dabei gleich- oder gegenläufig ausgestaltet sein. Sie vermischen, kneten und fördern die zu vermischende Masse. Zusätzlich hierzu können sämtliche Elemente des Schneckenextruders beheizt werden, sodass eine erforderliche Schmelztemperatur erreicht werden kann. Eine Druckerhöhung wird bei konischen Systemen durch eine Verengung des Mischerquerschnitts entlang der Förderrichtung erreicht.

Ferner können durch Veränderung der Windungsabstände der einzelnen Mischschnecken ebenfalls Druckerhöhungen erzielt werden. Im Betrieb kann ein Extrusionsmischer einen entlang seiner Förderstrecke ansteigenden Temperaturgradienten aufweisen. Das Material kann beispielsweise als Vormischung eingeführt werden. Durch den Mischvorgang und die interne Reibung des Materials kann bereits eine Temperaturerhöhung stattfinden. Mithilfe einer separaten Materialzufuhr kann der Zuschlagstoff beispielsweise erst später im Mischprozess hinzugefügt werden. Bei Verwendung von Plastomeren als Kunststoff-Basismaterial kann beispielsweise ein Doppelschnecken-Extruder verwendet werden. Das Kunststoffmaterial kann dabei zum Beispiel 70 % Polypropylen und 30 % Kiefernkernholz aufweisen. Bei einem Schmelzpunkt von etwa 175 °C können die Komponenten direkt vor der Einführung in den Mischer bei Raumtemperatur vorliegen und anschließend im Zuge des Mischprozesses von 50 °C bis auf 200 °C erwärmt werden. Das Druckniveau während des Mischvorgangs kann beispielsweise bei 40 bar oder höher liegen. Schließlich kann eine Vakuumentgasung vorgesehen sein.

Schließlich und nach einer weiteren Ausführungsform des Verfahrens wird ein Stempelkneter oder Innenmischer als Mischer verwendet. Das Durchmischen der im Mischer enthaltenen Materialmischung erfolgt dabei unter einem vorgegebenen Druck.

Der Stempelkneter weist typischerweise eine geschlossene Mischkammer auf, in der zwei gegenläufige Rotoren das in einem freien Mischkammervolumen befindliche Mischgut durchkneten. Befüllt wird der Stempelkneter in der Regel über eine Schachtöffnung des Stempels, welcher zum Zwecke der Befüllung nach oben aus der Mischkammer herausgefahren wird. Nach einer Befüllung mit Mischgut kann der Stempel nach unten in die Mischkammer herabgefahren werden und dabei die Kammer materialdicht, das heißt gas- und/oder fluiddicht verschließen. Die Mischkammer, die Rotoren und ein Entleerungssattel können mit Kühlkanälen durchzogen sein, mit denen der Stempelkneter auf eine zur Bearbeitung des Mischguts optimierte Prozesstemperatur temperiert werden kann. Gegen Ende des Mischvorgangs wird eine am unteren Ende der Mischkammer vorgesehene Entleerungsklappe geöffnet und das Mischgut kann unter laufenden Rotoren entleert werden.

Für den Mischvorgang werden die Komponenten bei geöffnetem Stempel in das Mischkammervolumen gegeben. Danach fährt der Stempel vertikal mit hohem Druck auf die Mischung und schließt dabei die Mischkammer ab. Bei gummiartigen Erzeugnissen werden keine besonders hohen Überdrücke erzeugt. Wichtig ist hierbei die Durchknetung des Mischguts. Die Aufheizung oder Erwärmung der Materialmischung lässt sich auch durch die Umlaufgeschwindigkeiten der Rotoren regeln. Es besteht ferner die Möglichkeit, den Mischer sozusagen zu überfüllen. Dabei kann zusätzlich Druck aufgebracht werden, der für die Erhöhung der Reibwirkung der festen zu mischenden Materialien dient. Dies kann auch für das Ausschmelzen von Werkstoffen genutzt werden, wie zum Beispiel von Polymeren, Metallen oder Keramiken.

Für die Herstellung des erfindungsgemäßen Kunststoffmaterials sei hier lediglich beispielhaft angegeben, dass zum Beispiel bei einem Kunststoff-Basismaterial auf Thermoplastbasis das Kunststoffmaterial bzw. die im Mischer enthaltene Materialmischung 70 Gew.-% Polypropylen und 30 Gew.-% Kiefernkernholz aufweisen kann. Die Komponenten werden dabei nacheinander in die Mischkammer gegeben. Der Mischer kann beispielsweise auf 80 °C vorgewärmt sein. Mit einem Stempeldruck von etwa 60 N/m² und einer Drehzahl von 60 pro Minute wird etwa für 3 Minuten gemischt. Es kann dabei eine Temperatur von 185 °C erreicht werden. Vorzugsweise ist eine Mischtemperatur von 180 °C bei einem Druck von 50 N/cm² vorgesehen. Die mit dem Zuschlagstoff versetzte Materialmischung kann unter diesen Parametern beispielsweise noch eine weitere Minute zur Erzielung einer geforderten Durchmischung weiter gemischt oder geknetet werden, bis das antibakterielle und/oder antimikrobielle Kunststoffmaterial aus dem Mischer entleert wird.

Bei Verwendung von Elastomeren als Kunststoff-Basismaterial kann eine vergleichbare Materialmischung vorgesehen sein. Die Mischtemperatur und die Prozesstemperatur beträgt hierbei jedoch lediglich 70 °C. Auch Duromere können mit einem Stempelkneter zur Bildung des erfindungsgemäßen antibakteriellen und/oder antimikrobiellen Kunststoffmaterials verarbeitet werden. Die Prozess- oder Mischtemperatur kann hierbei bis zu 300 °C betragen.

### Kurzbeschreibung der Figuren

Weitere Ziele, Vorteile, Eigenschaften sowie vorteilhafte Anwendungsmöglichkeiten des antibakteriellen und/oder antimikrobiellen Kunststoffmaterials werden in der nachfolgenden Beschreibung eines Ausführungsbeispiels unter Bezugnahme auf die Figuren erläutert. Hierbei zeigen:
- Fig. 1: eine schematische Darstellung eines erfindungsgemäßen antibakteriellen und/oder antimikrobiellen Kunststoffmaterials, welches ein Kunststoff-Basismaterial und zumindest einen antibakteriellen und/oder antimikrobiellen Zuschlagstoffs aufweist,
- Fig. 2: das Kunststoffmaterial gemäß Fig. 1 in granularer Form,
- Fig. 3: das Kunststoffmaterial gemäß Fig. 1 in Folienform,
- Fig. 4a bis 4d: eine Illustration eines Mischvorgangs zur Herstellung des Kunststoffmaterials unter Verwendung eines Stempelkneters.

### Detaillierte Beschreibung

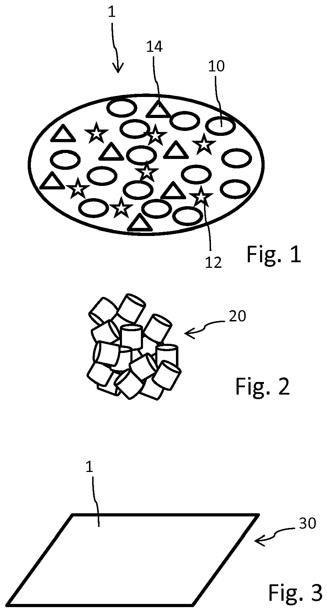

Das in Fig. 1 lediglich schematisch dargestellte antibakterielle und/oder antimikrobielle Kunststoffmaterial 1 weist ein Kunststoff-Basismaterial 10 und zumindest einen antibakteriellen und/oder antimikrobiellen Zuschlagstoff 12 auf. Der Zuschlagstoff weist zumindest ein Terpen auf oder besteht aus zumindest einem Terpen. Der Zuschlagstoff 12 enthält typischerweise mehrere Monoterpene und/oder ein oder mehrere Sesquiterpene. Der Zuschlagstoff kann ferner zumindest einen der folgenden Stoffe oder eine Kombination der nachfolgenden Stoffe: α-Pinen, β-Pinen, Δ-Caren, Camphen, Limonen, Myrcen, β-Phellandren, p-Cymen, Terpinol, α-Terpin, γ-Terpin, α-Terpineol, Bornylacetat oder Terpinylacetat enthalten oder hieraus bestehen.

Typischerweise ist der Zuschlagstoff 12 aus Kiefernnadelöl oder aus Kiefernkernholz gewonnen. Ferner kann auch Kiefernkernholz, typischerweise in zerspanter oder sägemehlartiger Konsistenz direkt als Zuschlagstoff fungieren. Es kann als Trägermasse für den Zuschlagstoff direkt mit dem Kunststoff-Basismaterial vermischt, typischerweise dispergiert sein.

Der Gewichtsanteil des Zuschlagstoffs im antibakteriellen und/oder antimikrobiellen Kunststoffmaterial beträgt zumindest 0,05 Gew.-% und höchstens 70 Gew.-%. Typischerweise beträgt der Gewichtsanteil des Zuschlagstoffs in besagtem Kunststoffmaterial zumindest 1 Gew.-%, höchstens aber 5 Gew.-%. Soll das Kunststoffmaterial weiterverarbeitet werden, kann es auch als ein sogenanntes Masterbatch-Material fungieren. Es kann dabei auch bis zu 70 Gew.-% des antibakteriellen und/oder antimikrobiellen Zuschlagstoffs aufweisen. Der Gewichtsanteil des Kunststoff-Basismaterials im Kunststoffmaterial beträgt zumindest 25 Gew.-%. Er kann zumindest 30 Gew.-%, 40 Gew.-% oder zumindest 50 Gew.-% betragen. Das Kunststoffmaterial kann aus einem Kunststoff-Basismaterial 10 und dem zumindest einen Zuschlagstoff bestehen. Es ist aber auch denkbar, dass das Kunststoffmaterial mit einem weiteren Füllstoff 14 versetzt ist. Der Füllstoff 14, beispielsweise ein Korkgranulat, kann in einem höheren Anteil als das Kunststoff-Basismaterial und/oder als der Zuschlagstoff vorliegen. Es ist denkbar, dass der Füllstoff mehr als 50 Gew.-% des Kunststoffmaterials darstellt und dass das Kunststoff-Basismaterial zwischen 20 Gew.-% und 30 Gew.-% des Kunststoffmaterials ausmacht.

In Fig. 2 ist dargestellt, dass das mit dem Zuschlagstoff versetzte Kunststoffmaterial 1 in Form eines Granulats 20 vorliegt. Nach Fig. 3 liegt das Kunststoffmaterial in Form einer Folie 30 vor. Diese ist typischerweise flexibel deformierbar. Sie kann eine Folienstärke von bis zu 1 mm aufweisen.

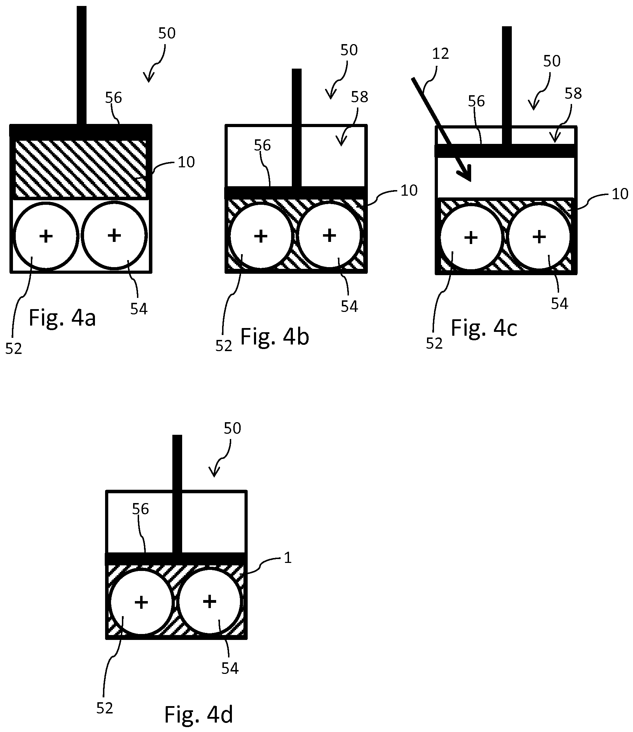

In den Fig. 4a bis 4d ist ein Verfahren zur Herstellung des Kunststoffmaterials am Beispiel eines Stempelkneters schematisch dargestellt. In einem ersten und der Fig. 4a gezeigten Verfahrensschritt wird das Kunststoff-Basismaterial in den Mischer 50 gegeben. Der Mischer 50 weist Rotoren 52, 54 auf. Nach oben hin weist der Stempelkneter 50 eine Schachtöffnung 58 auf, welche mittels eines anhebbaren und absenkbaren Stempels 56 gas- und fluiddicht verschließbar ist. In einem zweiten und in Fig. 4b gezeigten Verfahrensschritt wird das zugeführte Kunststoff-Basismaterial 10, ggf. auch bereits der zugefügte Zuschlagstoff 12 homogenisiert, zerkleinert und durch Erhöhung einer Temperatur aufgeschmolzen. Die Temperaturerhöhung und der Temperatureintrag kann mittel und durch Reibung des Kunststoff-Basismaterials 10 mit den Rotoren 52, 54 erfolgen. Die Temperatur, insbesondere die Misch- oder Prozesstemperatur des Mischers 50 kann ferner mit einer aktiven Heizung oder mit einer Kühlung kontrolliert werden.

Optional kann nach einem ersten Durchmischen in einem weiteren Verfahrensschritt gemäß Fig. 4c ein antibakterieller und/oder antimikrobieller Zuschlagstoff 12 hinzugegeben werden. In einem weiteren und finalen Prozessschritt, welcher in Fig. 4d gezeigt ist, erfolgt eine finale Durchmischung und ein Durchkneten des Materialgemischs, bevor das Kunststoffmaterial den Mischer 50 verlässt. Mittels des Stempelkneters aber auch mittels anderen, beispielsweise extruderbasierten Mischverfahren kann das antibakterielle und/oder antimikrobielle Kunststoffmaterial compoundiert werden.

### Bezugszeichenliste

- 1: Kunststoffmaterial
- 10: Kunststoff-Basismaterial
- 12: Zuschlagstoff
- 14: Füllstoff
- 20: Granulat
- 30: Folie
- 50: Mischer
- 52: Rotor
- 54: Rotor
- 56: Stempel
- 58: Schachtöffnung

## Patentansprüche

1. Antibakterielles und/oder antimikrobielles Kunststoffmaterial (1), mit:
- einem Kunststoff-Basismaterial (10), und
- zumindest einem antibakteriellen und/oder antimikrobiellen Zuschlagstoff (12), welcher zumindest ein Terpen aufweist.

2. Kunststoffmaterial nach Anspruch 1, wobei der Zuschlagstoff (12) zumindest ein oder mehrere Monoterpene oder ein oder Sesquiterpene oder eine hieraus gebildete Mischung enthält.

3. Kunststoffmaterial nach Anspruch 1 oder 2, wobei der Zuschlagstoff (12) zumindest einen der folgenden Stoffe oder eine Kombination der nachfolgenden Stoffe: α-Pinen, β-Pinen, Δ-Caren, Camphen, Limonen, Myrcen, β-Phellandren, p-Cymen, Terpinol, α-Terpin, γ-Terpin, α-Terpineol, Bornylacetat oder Terpinylacetat enthält.

4. Kunststoffmaterial nach einem der vorhergehenden Ansprüche, wobei der Zuschlagstoff (12) aus Kiefernnadelöl oder aus Kiefernkernholz gewonnen ist.

5. Kunststoffmaterial nach einem der vorhergehenden Ansprüche, wobei ein Gewichtsanteil des Zuschlagstoffs (12) im Kunststoffmaterial (1) zumindest 0,05 Gew.-% und höchstens 70 Gew.-% beträgt.

6. Kunststoffmaterial nach einem der vorhergehenden Ansprüche, wobei ein Gewichtsanteil des Kunststoff-Basismaterials (10) im Kunststoffmaterial (1) zumindest 25 Gew.-% und höchstens 99,5 Gew.-% beträgt.

7. Kunststoffmaterial nach einem der vorhergehenden Ansprüche, wobei das Kunststoff-Basismaterial (10) zumindest ein Plastomer, ein Elastomer oder ein Duromer oder ein hieraus gebildetes Gemisch aufweist.

8. Kunststoffmaterial nach einem der vorhergehenden Ansprüche, welches ferner einen Füllstoff (14) aufweist, welcher Holz, Holzfasern, Kork oder Naturfasern enthält.

9. Kunststoffmaterial nach einem der vorhergehenden Ansprüche, wobei das Kunststoffmaterial (1) als Masterbatch-Material, als Granulat oder als Folie ausgebildet ist.

10. Kunststoffmaterial nach einem der vorhergehenden Ansprüche, wobei der Zuschlagstoff dem Kunststoff-Basismaterial (10) in einem aufgeschmolzenen Zustand beigemischt und homogen im Kunststoff-Basismaterial dispergiert ist.

11. Kunststoffmaterial nach einem der vorhergehenden Ansprüche, welches im Wesentlichen faserfrei ist.

12. Kunststoffmaterial nach einem der vorhergehenden Ansprüche, wobei der Zuschlagstoff (12) bei Zimmertemperatur pastös, fließfähig oder flüssig ist.

13. Verfahren zur Herstellung eines Kunststoffmaterials nach einem der vorhergehenden Ansprüche mit den Schritten:
- Bereitstellen eines Kunststoff-Basismaterial (10) in einem Mischer (50),
- Erwärmen des Kunststoff-Basismaterials und Hinzufügen zumindest eines antibakteriellen und/oder antimikrobiellen Zuschlagstoffs (12) zur Bildung einer Materialmischung, wobei der Zuschlagstoff (12) zumindest ein Terpen enthält.
- Durchmischen der im Mischer (50) enthaltenen Materialmischung bei vorgegebener Temperatur über die Dauer eines vorgegebenen Zeitintervalls.

14. Verfahren nach Anspruch 13, wobei ein Stempelkneter als Mischer (50) verwendet wird und wobei das Durchmischen unter einem vorgegebenen Druck erfolgt.
